## Europäisches Patentamt
## European Patent Office
## Office européen des brevets

(19)

(11) Veröffentlichungsnummer : **0 118 029**
**B1**

(12) **EUROPÄISCHE PATENTSCHRIFT**

(45) Veröffentlichungstag der Patentschrift :
27.05.87

(21) Anmeldenummer : 84101035.8

(22) Anmeldetag : 02.02.84

(51) Int. Cl.⁴ : **B 01 D 3/00**, B 01 D 53/18,
B 01 J 4/00, F 28 F 25/02

(54) Vorrichtung zur gravimetrischen Flüssigkeitsverteilung für Stoff- und Wärmeaustauschkolonnen.

(30) Priorität : 01.03.83 CH 1111/83

(43) Veröffentlichungstag der Anmeldung :
12.09.84 Patentblatt 84/37

(45) Bekanntmachung des Hinweises auf die Patenterteilung : 27.05.87 Patentblatt 87/22

(84) Benannte Vertragsstaaten :
BE DE FR GB IT NL SE

(56) Entgegenhaltungen :
DE-A- 1 442 929
DE-C- 918 638
FR-A- 703 029
FR-A- 2 359 635
GB-A- 193 116
GB-A- 487 946
GB-A- 1 160 260
US-A- 4 264 538

(73) Patentinhaber : GEBRÜDER SULZER AKTIENGESELL-
SCHAFT
Zürcherstrasse 9
CH-8401 Winterthur (CH)

(72) Erfinder : Meier, Werner, Dr.
Rosenweg 1
CH-8353 Elgg (CH)

(74) Vertreter : Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)

Jouve, 18, rue St-Denis. 75001 Paris, France

EP 0 118 029 B1

**Beschreibung**

Die Erfindung bezieht sich auf eine Vorrichtung zur gravimetrischen Flüssigkeitsverteilung für Stoff- und Wärmeaustauschkolonnen gemäss Oberbegriff von Patentanspruch 1.

Die Erfindung soll insbesondere in Kolonnen mit grossem Durchmesser, z. B. in der Grössenordnung von ca. 3 und mehr Metern eingesetzt werden.

Flüssigkeitsverteilvorrichtungen bezwecken eine gleichmässige Verteilung der Flüssigkeit über den Querschnitt derartiger Kolonnen.

Gebräuchliche Typen solcher Kolonnen, auf welche die Erfindung vorteilhaft Anwendung finden kann, sind insbesondere Kolonnen, bei denen die Austauschabschnitte aus geordneten Packungen, z. B. aus geriffelten, lamellenartigen Elementen, bestehen. Jedoch kann die Erfindung auch bei solchen Kolonnen verwendet werden, in denen die Austauschabschnitte aus regellosen Schüttungen von Füllkörpern, beispielsweise Raschigringen oder Berlsätteln bestehen.

In derartigen Kolonnen kann z. B. eine Destillation, Rektifikation, Extraktion, Absorption, auch eine Abtrennung isotoper Elemente aus einem Stoff aufgrund einer chemischen Austauschreaktion wie auch ein Wärmeaustausch zwischen einer Flüssigkeit und einem dampf- bzw. gasförmigen Medium durchgeführt werden.

Bekanntlich hängt die Wirkung, in den erstgenannten Fällen die Trennwirkung und im letztgenannten Fall die Wärmeübertragung wesentlich von einer gleichmässigen und feinen Verteilung der Flüssigkeit auf der Oberfläche eines Austauschabschnittes ab. Von der grossen Anzahl von Flüssigkeitsverteilern werden nachstehend einige bekannte und häufig angewendete Typen erwähnt.

· Die am häufigsten verwendeten Vorrichtungen zur gravimetrischen Flüssigkeitsverteilung sind als Loch- oder Siebböden oder als Rinnen-, Kasten- oder Rohrverteiler ausgeführt. Hierbei handelt es sich um Verteiler, in welchen die Flüssigkeit über die gesamte Breite des Querschnittes kommuniziert. Die Flüssigkeit wird hierbei ausschliesslich unter dem Einfluss der Schwerkraft durch das Verteilsystem gefördert.

Bekannt sind auch Verteilsysteme z. B. aus der FR-PS-703 029, welche aus einer Serie von Rinnen bestehen, welche von einem zentralen Behälter gespiesen werden. Dabei sind die Rinnen, die Zuführungen zu den Rinnen und der zentrale Behälter mit einem Ueberlaufsystem, d. h. Schnäbeln versehen, über welche die Flüssigkeit vom Behälter über die Zuführungen und Rinnen auf die Kolonne aufgegeben wird. Die Praxis hat jedoch gezeigt, dass auch solche oder nach dem ähnlichen Prinzip arbeitende Flüssigkeitsverteiler die gewünschte gleichmässige Berieselung nicht erbringen und damit die Trennleistung stark vermindern.

Die Gründe dazu sind einleuchtend. Ueberlaufsysteme solcher Art, wie z. B. die Ueberlaufschnäbel, weisen eine Ueberlaufhöhe bei den Schnäbeln von nur wenigen mm auf, d. h. bei einer nur sehr geringen Schiefstellung des Verteilungssystemes oder durch die Flüssigkeitsströmung bedingte Niveauunterschiede in den Zulaufleitungen zu den Rinnen und in den Rinnen selbst wird die Flüssigkeit ungleichmässig auf die Kolonne aufgegeben.

Es sei noch erwähnt, dass auch Verteiler bekannt sind, in welchen die Flüssigkeit durch düsenartige Sprühvorrichtungen auf dem Kolonnenquerschnitt verteilt wird. Derartige Verteiler benötigen jedoch Pumpen zur Förderung der Flüssigkeit. Ausserdem wird auch bei diesen Verteilern keine gleichmässige Flüssigkeitsverteilung erreicht, da Ueberlappungen der aus den Düsen austretenden Sprühkegel entstehen bzw. Stellen auf dem zu beschickenden Kolonnenquerschnitt, an denen überhaupt keine Flüssigkeit auftrifft.

Alle diese Verteiler weisen den wesentlichen Nachteil auf, dass bei grossen Kolonnendurchmessern von beispielsweise 3-10 m keine gleichmässige Verteilung der Flüssigkeit mehr gewährleistet ist.

Die gravimetrischen Flüssigkeitsverteiler, auf welche sich die Erfindung bezieht, basieren auf dem gleichen physikalischen Grundgesetz, nämlich dem Torricellischen Theorem : $w = \sqrt{2gh}$, wobei w die Ablaufgeschwindigkeit in m/s, g die Fallbeschleunigung in m/s und h die Stauhöhe in m ist. Aus der Gleichung ergibt sich, dass die Ablaufgeschwindigkeit proportional zur $\sqrt{\ }$ der Stauhöhe, d. h. der Flüssigkeitszulaufhöhe ist.

Aus Kosten- und Platzgründen kann die Flüssigkeitszulaufhöhe nicht beliebig gewählt werden.

Ueblicherweise bewegt sich der Belastungsbereich (Flüssigkeitsmenge/Zeit und Kolonnenquerschnittsfläche = Belastung) von Kolonnen zwischen 30-100 %. Die Folge hiervon ist, dass bei minimaler Belastung, d. h. 30 %, die Flüssigkeitszulaufhöhe bis 9 mal kleiner ist als die maximale.

Aus den vorstehend erwähnten Gründen kann bei minimaler Belastung die Flüssigkeitszulaufhöhe 50 mm kaum übersteigen.

Steht nun ein Verteiler beispielsweise um 0,5 % gegen die Horizontale schief, so bewirkt dieses bei einem grossen Kolonnendurchmesser von z. B. 5 m, dass die Flüssigkeit bei einer Stauhöhe von 25 mm zum grossen Teil nur noch auf der einen Hälfte der Kolonne abfliesst.

Selbst bei einer Stauhöhe von 100 mm beträgt der Unterschied der Flüssigkeitsmenge unter den gleichen Voraussetzungen von einer Kolonnenwand zur diametral gegenüberliegenden noch 13 %.

Diese ungleiche Flüssigkeitsverteilung, auch mit Maldistribution bezeichnet, bewirkt eine Verminderung der Wirksamkeit, d. h. z. B. der Trennleistung bei Rektifikationskolonnen.

Als Maldistribution wird jegliche Abweichung des Strömungsprofils von der idealen Kolbenströmung bezeichnet, also z. B. ungleichmässige Flüssigkeitsbelastungen oder unterschiedliche Zusammensetzung der Flüssigkeit über den Kolonnenquerschnitt. Maldistribution ist im wesentlichen durch zwei Grössen charakterisiert. Die eine ist die Stärke der Maldistribution und gibt an, wie gross die Abweichungen der örtlichen Flüssigkeitsbelastungen oder Flüssigkeitszusammensetzungen vom idealen Mittelwert sind. Die zweite Grösse beschreibt die Anordnung dieser Ungleichverteilung, insbesondere die Distanz zwischen den maximalen und minimalen Werten der Flüssigkeitsbelastung.

In der Praxis wird eine solche Ungleichverteilung oft durch eine Cosinusfunktion angenähert, wobei die Maldistributionsstärke $\lambda$ der Amplitude und die Distanz zwischen Maxima und Minima der halben Wellenlänge L entspricht.

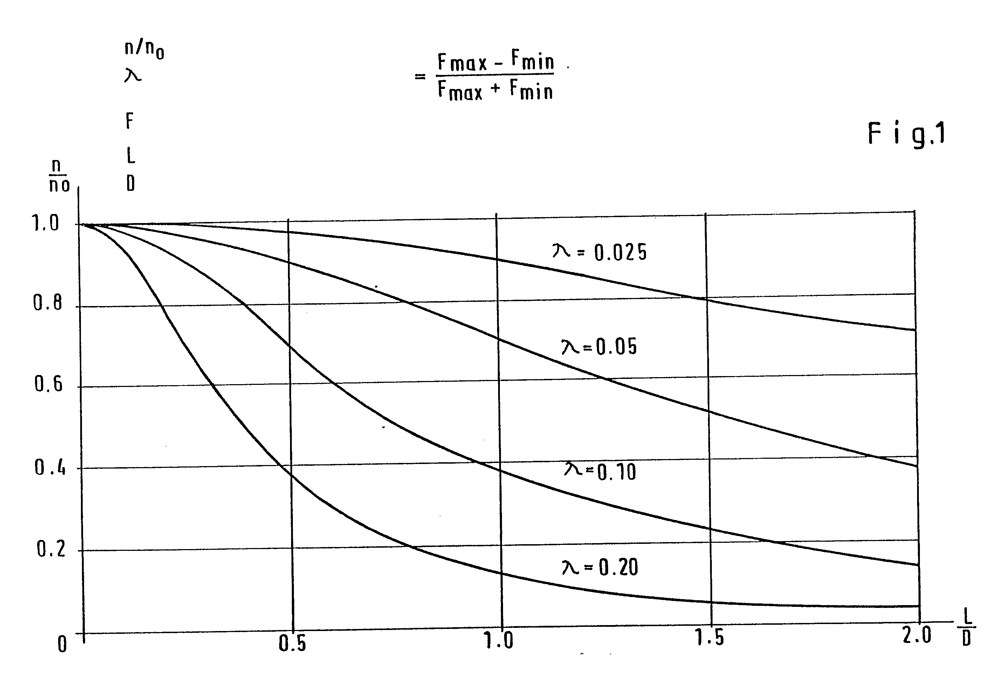

Die Theorie der Maldistribution ermöglicht Aussagen über die Auswirkung sowohl der Amplitude wie auch der Wellenlänge einer Maldistribution auf die Wirksamkeit einer Kolonne. Fig. 1 stellt diese Einflüsse für eine Destillationskolonne dar. Bei dieser Darstellung ist die Wellenlänge der als cosinusförmig angenommenen Maldistribution ins Verhältnis zum Kolonnendurchmesser (L/D) gesetzt worden.

Die Wirksamkeit der Kolonne nimmt mit zunehmender Maldistributionsstärke ab. Bei gleichbleibender Stärke ist der Einfluss der Maldistribution gering, wenn sie kleinräumig ist, d. h. bei kleinen Wellenlängen L im Vergleich zum Kolonnendurchmesser D. Je weiträumiger die Maldistribution jedoch ist, desto grösser wird ihr Einfluss auf die Wirksamkeit der Kolonnen. Die Wirksamkeit erreicht ein Minimum, wenn die Wellenlänge L der Maldistribution zwei Kolonnendurchmesser (L/D = 2) beträgt.

Aus diesen Gründen muss durch konstruktive Massnahmen weiträumige Maldistribution möglichst vermieden und die Maldistributionsstärke möglichst klein gehalten werden.

Den herkömmlichen Verteilern ist jedoch gemeinsam, dass sie weiträumig Maldistribution erzeugen. Dies rührt von den mit zunehmendem Kolonnendurchmesser zunehmender Komplexität der Strömungsverhältnisse in den Verteilern her und den damit zusammenhängenden uneinheitlichen Strömungen. Weiter können Verteiler nie ganz exakt horizontal nivelliert werden, was ebenfalls zur Maldistribution führt. Durch die grossen Abmessungen bedingt, können Verteiler einen Durchhang aufweisen, der ebenfalls weiträumige Maldistribution produziert.

Speziell anfällig auf Schiefstellung sind Verteiler mit Ueberläufen, die z. B. als V-förmige Schlitze oder Schnäbel ausgebildet sind. In diesen Fällen beträgt die Ueberlaufhöhe maximal einige mm. Selbst wenn das Verteilsystem in mehrere Einzelverteiler aufgeteilt wird, welche von einem zentralen Behälter einzeln gespiesen werden, entstehen schon bei geringstem Schiefstellen oder Turbulenz der Flüssigkeitsströmung starke Unterschiede in den Flüssigkeitsaustrittsmengen und damit eine ungleichmässige Flüssigkeitsverteilung.

Die der Erfindung zugrundeliegende Aufgabe besteht in der Ausbildung einer Vorrichtung zur gravimetrischen Flüssigkeitsverteilung, welche auch bei Kolonnendurchmessern von z. B. 3 m und mehr und auch bei Schiefstellung der Vorrichtung eine mindestens nahezu gleichmässige Flüssigkeitsverteilung einheitlicher Zusammensetzung über den gesamten Kolonnenquerschnitt gewährleistet und damit eine weiträumige Maldistribution vermieden wird.

Diese Aufgabe wird erfindungsgemäss durch die im Kennzeichen des Anspruchs 1 angegebenen Merkmale gelöst.

Erfindungsgemäss ausgebildete Flüssigkeitsverteilvorrichtungen sind baulich einfach und tragen zu einer hohen Trennleistung bzw. optimalen Wärmeübertragung in Kolonnen wesentlich bei.

Wesentlich bei der Erfindung ist, dass die gesamte zu verteilende Flüssigkeit über eine einzige Stelle, nämlich von einem Behälter aus über Dosiervorrichtungen in Teilströmen den Einzelverteilern zugeführt wird. Hierbei sind die Teilströme proportional den Teilflächen des Kolonnenquerschnittes, welche von den Einzelverteilern beschickt werden.

Vorteilhaft, aber nicht zwingend, ist der Behälter mit den Dosiervorrichtungen im Zentrum des Kolonnenquerschnittes angeordnet.

Die Anzahl der Einzelverteiler und Dosiervorrichtungen kann beliebig gross gewählt werden, so dass die erwähnten Nachteile der bekannten Verteiler nicht auftreten.

Die Maldistribution kann somit bei einer erfindungsgemäss ausgebildeten Vorrichtung unabhängig vom Kolonnendurchmesser klein gehalten werden.

Auch bei Kolonnen, die beispielsweise auf schwimmenden Produktionsanlagen erstellt werden, die Wellenbewegungen ausgesetzt sind, bewirkt eine erfindungsgemäss ausgebildete Vorrichtung trotzdem eine äusserst gleichmässige Flüssigkeitsverteilung.

Die Erfindung wird im folgenden anhand von in der Zeichnung dargestellten Ausführungsbeispielen erläutert.

Figur 2 zeigt in schematischer Weise einen Ausschnitt einer Kolonne mit einer erfindungsgemässen Ausführungsform einer Flüssigkeitsverteilvorrichtung im Längsschnitt längs der Schnittlinie II-II der Fig. 3 und

Figur 3 einen Querschnitt der Flüssigkeitsverteilvorrichtung längs der Schnittlinie III-III der Fig. 2, während in

Figur 4 eine abgewandelte Ausführungsform eines Behälters mit Dosiervorrichtungen in einem Längsschnitt dargestellt ist.

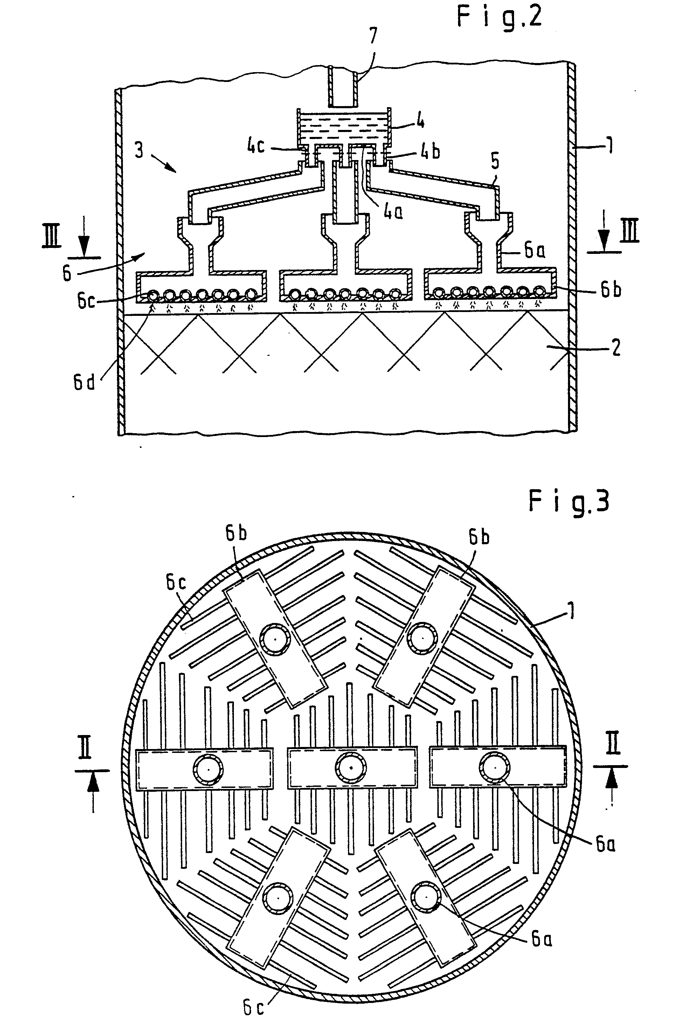

Fig. 2 zeigt einen Ausschnitt einer Stoffaustauschkolonne 1, und zwar den obersten Teil eines Stoffaustauschabschnittes 2, der beispielsweise aus Packungskörpern mit geordneter Struktur besteht.

Oberhalb dieses Austauschabschnittes ist eine Vorrichtung 3 zur gravimetrischen Flüssigkeitsverteilung angeordnet, wobei die Vorrichtung z. B. in nicht dargestellter Weise auf einem Rost abgestützt ist.

Im Ausführungsbeispiel weist die Vorrichtung einen Behälter 4 auf. Mit dem Boden 4a des Behälters 4 sind Rohrstutzen 4b verbunden, in welchen als Blenden 4c ausgebildete Dosiervorrichtungen angeordnet sind. Im Ausführungsbeispiel sind alle Blenden auf gleicher Höhe angebracht, so dass sich die gleiche hydrostatische Höhe einstellt. Wichtig ist, dass das Flüssigkeitsniveau über den Dosiervorrichtungen liegt und je nach Betriebszustand einen minimalen Abstand aufweist, typisch z. B. mindestens 50 mm. Damit bleibt das Verhältnis der einzelnen Flüssigkeitsmengen im gesamten Bereich der Flüssigkeitsbelastung konstant.

Als Dosiervorrichtungen können anstelle der Blenden 4c auch Ventile, Düsen oder andere Drosseleinrichtungen angeordnet sein.

Die Rohrstutzen 4b münden in Strömungskanäle 5, durch welche im Betrieb die Flüssigkeit in einzelne Rohrverteiler 6 durch deren Steigrohre 6a strömt. Die Strömungskanäle 5 müssen derart bemessen und belüftet sein, damit sie die Wirkung der Dosiervorrichtungen nicht beeinträchtigen.

Mit den Hauptrohren 6b sind in ihrem unteren Bereich an gegenüberliegenden Seiten Röhrchen 6c verbunden, die sich bis an den Endbereich des zu beschickenden Teilquerschnittes der Kolonne 1 erstrecken, wie aus Fig. 3 hervorgeht.

Im Ausführungsbeispiel ist der gesamte Kolonnenquerschnitt bezüglich des Flüssigkeitsverteilers in sieben Teilbereiche (Fig. 3) unterteilt, wobei nur drei in Fig. 2 ersichtlich sind.

An ihrer Unterseite sind die Röhrchen 6c — wie in Fig. 2 angedeutet ist — mit Flüssigkeitsaustrittsöffnungen 6d versehen, durch welche die Flüssigkeit gleichmässig über den gesamten Querschnitt des Stoffaustauschabschnittes 2 verteilt wird.

Im Ausführungsbeispiel wird im Betrieb durch ein Zulaufrohr 7 Flüssigkeit in den Behälter 4 eingeleitet.

Da üblicherweise Austauschkolonnen mehrere, durch Zwischenräume getrennte Stoffaustauschabschnitte aufweisen, werden in den Zwischenräumen unterhalb der Austauschabschnitte Sammler bekannter Ausführungsformen angeordnet, von welchen die Flüssigkeit in die unterhalb eines jeden Sammlers angeordneten Flüssigkeitsverteiler eingeleitet wird.

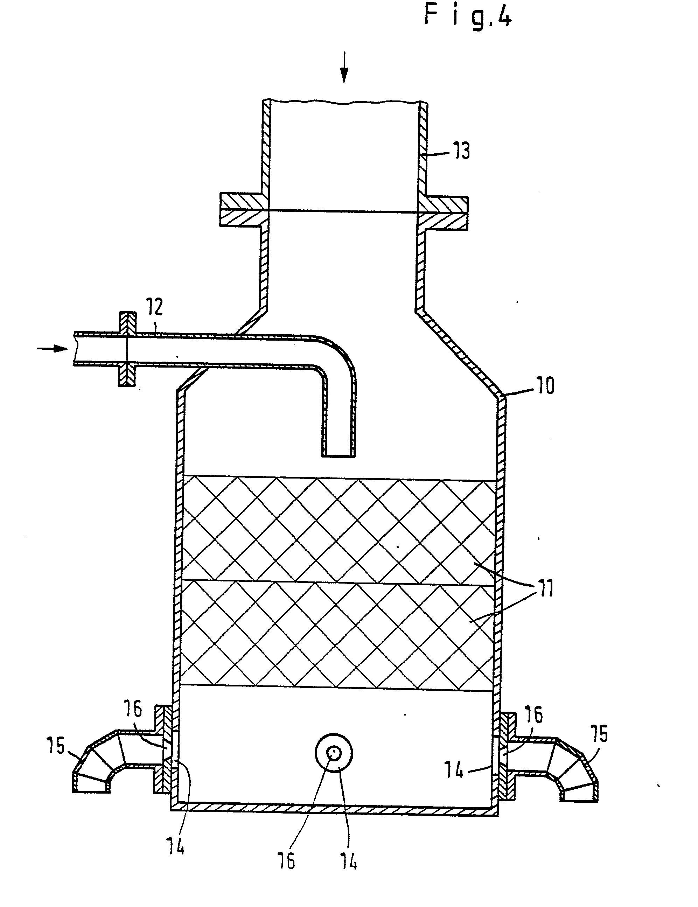

Fig. 4 zeigt ein Detail einer abgewandelten Form eines Behälters mit Dosiervorrichtungen.

Im Behälter 10 ist eine Mischvorrichtung 11 angeordnet, die z. B. wie die in der CH-PS 537 208 beschriebene statische Mischvorrichtung ausgebildet sein kann.

Die Anordnung einer Mischvorrichtung ist insbesondere in den Fällen vorteilhaft, wenn die zu verteilende Flüssigkeit aus mehr als einer Quelle stammt, z. B. wenn der Rücklauf aus dem Verstärkerteil einer Rektifikationskolonne auf ihren Abtriebsteil aufgegeben und ausserdem zusätzlich Flüssigkeit in die Kolonne eingespeist wird. In Fig. 4 erfolgt der Zulauf von Flüssigkeit durch eine Leitung 12 und der Rücklauf durch eine, an die Vorrichtung 10 angeflanschte Leitung 13.

Die Anordnung von einer Mischvorrichtung kann auch dann vorgesehen werden, wenn die Flüssigkeit nur aus einer Quelle stammt, die Konzentrationsunterschiede aufweist. Dieses kann der Fall sein, wenn die Flüssigkeit aus einem oberhalb der Vorrichtung in der Kolonne angeordneten Austauschabschnitt herrührt.

Im Ausführungsbeispiel sind im Behälter 10 im unteren Bereich der Seitenwände gegenüberliegende Auslassöffnungen 14 vorhanden, an welche Rohrstutzen 15 anschliessen, wobei zwischen diesen und der Behälterwand Blenden 16 zur Dosierung der austretenden Flüssigkeitsteilmengen angebracht sind.

## Patentansprüche

1. Vorrichtung zur gravimetrischen Flüssigkeitsverteilung für Stoff- und Wärmeaustauschkolonnen mit Einzelverteilern (6), welche von einem darüber befindlichen Behälter (4 ; 10) gespeist werden, dadurch gekennzeichnet, daß den Einzelverteilern (6) aus dem Behälter (4 ; 10) Flüssigkeitsmengen über als Drosselvorrichtungen ausgebildete Dosiervorrichtungen (4c ; 16) zuführbar sind, welche proportional der zu beschickenden Querschnittsflächen der Einzelverteiler (6) ausgelegt sind.

2. Vorrichtung nach Anspruch 1, dadurch gekennzeichnet, daß am Behälterboden (4a) und/ oder an seinen Seitenwänden Rohrstutzen (4b) angeordnet sind, welche zu den Einzelverteilern (6) führen, wobei in den Rohrstutzen (4b) die Dosiervorrichtungen (4c) angebracht sind.

3. Vorrichtung nach Anspruch 1, dadurch gekennzeichnet, daß im Behälterboden und/oder in seinen Seitenwänden Öffnungen (14) vorgesehen sind, die mit den Dosiervorrichtungen (16) verbunden sind.

4. Vorrichtung nach einem der Ansprüche 1 bis 3, dadurch gekennzeichnet, daß im Behälter (10) eine Mischvorrichtung (11) angeordnet ist.

## Claims

1. An apparatus for gravimetric liquid distribution, of use for mass transfer columns and heat exchange columns having individual distributors (6) supplied from a top tank (4 ; 10), characterised in that quantities of liquid can be supplied to the distributors (6) from the tank (4 ; 19) by way of restrictor type metering facilities (4c ; 16) designed in proportion to the required-to-be-supplied cross-sectional areas of the individual distributors (6).

2. An apparatus according to claim 1, characterised in that the tank base (4a) and/or the tank side walls have spigots (4b) which extend to the individual distributors (6) and in which the metering facilities (4c) are disposed.

3. An apparatus according to claim 1, characterised in that the tank base and/or tank side walls are formed with apertures (14) which are connected to the metering facilities (16).

4. An apparatus according to any of claims 1-3, characterised in that a mixer (11) is disposed in tank (10).

**Revendications**

1. Dispositif de répartition gravimétrique de liquides dans des colonnes d'échange de matières et d'échange thermique, comportant des répartiteurs individuels (6) qui sont alimentés par un réservoir sus-jacent (4 ; 10), caractérisé par le fait qu'il est possible de délivrer aux répartiteurs individuels (6) à partir du réservoir (4 ; 10), par l'intermédiaire de dispositifs doseurs (4c ; 16) réalisés en tant que dispositifs d'étranglement, des quantités de liquide déterminées proportionnellement aux surfaces de la section des répartiteurs individuels (6) devant être alimentées.

2. Dispositif selon la revendication 1, caractérisé par le fait que des raccords tubulaires (4b) situés sur le fond (4a) du réservoir et/ou sur ses parois latérales gagnent les répartiteurs individuels (6), les dispositifs doseurs (4c) étant logés dans ces raccords tubulaires (4b).

3. Dispositif selon la revendication 1, caractérisé par le fait que des orifices (14), prévus dans le fond du réservoir et/ou dans ses parois latérales, sont raccordés aux dispositifs doseurs (16).

4. Dispositif selon l'une des revendications 1 à 3, caractérisé par le fait qu'un dispositif mélangeur (11) est installé dans le réservoir (10).

Fig.1

Fig.2

Fig.3

2

Fig.4